# EUROPEAN PATENT SPECIFICATION

(11) **EP 3 001 637 B1**
(45) Date of publication and mention of the grant of the patent: **18.07.2018**
(21) Application number: 15182439.8
(22) Date of filing: 26.08.2015
(51) Int. Cl.: H04L 29/06, G06F 3/01, H04W 12/08, G06F 1/16

(54) **METHODS AND DEVICES FOR AUTHORIZING OPERATION**
VERFAHREN UND VORRICHTUNGEN ZUR AUTORISIERUNG DES BETRIEBS
PROCÉDÉS ET DISPOSITIFS POUR AUTORISER UN FONCTIONNEMENT

(30) Priority: 29.09.2014 CN 201410515402
(43) Date of publication of application: 30.03.2016
(73) Proprietor: Xiaomi Inc., Beijing 100085 (CN)
(72) Inventor: DING, Liang, 100085 BEIJING (CN); HUANG, Bolin, 100085 BEIJING (CN); YIN, Jiajin, 100085 BEIJING (CN)
(74) Representative: Delumeau, François Guy

(56) References cited:
- WO-A1-2014/143997
- WO-A2-2014/153528
- US-A1- 2012 317 024
- US-B1- 7 571 468

## Description

### TECHNICAL FIELD

The present disclosure generally relates to the field of network security, and more particularly, to methods and devices for authorizing an operation.

### BACKGROUND

Currently, the mobile internet may provide a wide variety of services, and many of the services relate to user's property and privacy.

To perform such operations, typically in the related art, the user's identity is verified through a mobile phone verification code. Generally, the process includes as follows: the user send a request for a predetermined operation to a server on the mobile phone; the server causes the mobile phone to display a verification interface, and meanwhile sends a six-bit dynamic authorization code to the binding mobile phone of the user; then, the user inputs the six-bit dynamic authorization code received by the mobile phone to the verification interface displayed on the mobile phone, and submits it to the server; when it detects that the six-bit dynamic authorization code is correct, the server authorize the mobile phone of the user to perform the predetermined operation.

Document WO 2014/153528 discloses a system and method for authenticating and continuously verifying authorized users of a digital device including an authentication device attached to an arm or wrist of authorized users.

### SUMMARY

In order to overcome problems in the related art that the dynamic authorization code in a form of a short message requires a complex acquiring operation, and may probably be obtained by an unauthorized or illegal user (in other words may be "leaked"), methods and devices for authorizing an operation are provided by embodiments of the present disclosure. The technical solutions are as follows. The invention is defined by the appended claims.

According to a first aspect, the invention relates to a method for authorizing an operation, which is applied in a mobile terminal. The method comprises:
acquiring motion data collected by a wearable device;
detecting whether the motion data is motion data matched with a physical motion for verification; and
if the motion data is the motion data matched with the physical motion for verification, authorizing to perform a predetermined operation corresponding to the physical motion for verification, said operation being required to be performed interactively with a server, said method comprising:
   acquiring an encrypted authorization code from the server; sending the encrypted authorization code to the wearable device; and acquiring an authorization code decrypted by the wearable device;
   and performing the predetermined operation interactively with the server by using the authorization code.

In an embodiment, the acquiring motion data collected by a wearable device, including:
if a preset physical motion for verification exists, directly acquiring the motion data collected by the wearable device;
or,
if a preset physical motion for verification does not exist, generating randomly a physical motion for verification; prompting a user about the physical motion for verification; and after the prompting about the physical motion for verification, acquiring the motion data collected by the wearable device.

In a particular embodiment, the method further comprises:
storing in advance at least one physical motion for verification, and a predetermined operation corresponding to the at least one physical motion for verification one by one, while respective physical motion for verification corresponding to a same predetermined operation or different predetermined operations.

In a particular embodiment, the method further comprises:
detecting whether there is a binding wearable device that has been connected; and
if there is a binding wearable device that has been connected, performing the step of acquiring motion data collected by the wearable device.

In a particular embodiment, the method further comprises:
establishing in advance a binding relationship with the wearable device.

In a particular embodiment, the step of establishing in advance a binding relationship with the wearable device, comprises:
acquiring another motion data from the wearable device; detecting whether said another motion data is matched with motion data corresponding to a physical motion for binding; if said another motion data is matched with the motion data corresponding to the physical motion for binding, establishing the binding relationship with the wearable device; or,
scanning a two-dimensional identification code of the wearable device to obtain an identification of the wearable device; sending the identification of the wearable device and a device identification of the mobile terminal to a server, and the server being configured to establish the binding relationship between the wearable device and the mobile terminal according to the identification of the wearable device and the device identification of the mobile terminal; or,
sending an identification of the wearable device and a user account to the server, the server being configured to bind the wearable device and the user account according to the identification of the wearable device, and establish the binding relationship between the wearable device and a mobile terminal using the user account.

According to a second aspect, the invention relates to a method for authorizing an operation, which is applied in a wearable device. The method comprises:
collecting motion data; and
providing the motion data to a mobile terminal; the mobile terminal being configured to detect whether the motion data is motion data matched with a physical motion for verification; and if the motion data is the motion data matched with the physical motion for verification, authorizing to perform a predetermined operation corresponding to the physical motion for verification.

In a particular embodiment, the method further comprises:
when the motion data is the motion data matched with the physical motion for verification, providing an authorization code to the mobile terminal, the mobile terminal being configured to perform the predetermined operation interactively with a server by using the authorization code.

In a particular embodiment, when the motion data is matched with the motion data corresponding to the physical motion for verification, the providing an authorization code to the mobile terminal, includes:
receiving an encrypted authorization code acquired by the mobile terminal from the server; decrypting the encrypted authorization code to obtain a decrypted authorization code; sending the decrypted authorization code to the mobile terminal;
or,
generating an authorization code, and sending the authorization code to the mobile terminal.

In a particular embodiment, the method further comprises:
establishing in advance a binding relationship with the mobile terminal.

In an embodiment, the establishing in advance a binding relationship with the mobile terminal, includes:
collecting another motion data; and
sending said another motion data to the mobile terminal, the mobile terminal being configured to detect whether said another motion data is matched with motion data corresponding to a physical motion for binding; and if said another motion data is matched with the motion data corresponding to the physical motion for binding, establishing the binding relationship with the wearable device.

According to a third aspect, the invention relates to a device for authorizing an operation, which is applied in a mobile terminal. The device comprises:
a data acquiring module, configured to acquire motion data collected by a wearable device;
a match detecting module, configured to detect whether the motion data is motion data matched with a physical motion for verification; and
an operation performing module, configured to, if the motion data is the motion data matched with the physical motion for verification, authorize to perform a predetermined operation corresponding to the physical motion for verification, wherein the operation-performing module comprises:
a performing submodule comprising a first code submodule, configured to acquire an encrypted authorization code from the server; send the encrypted authorization code to the wearable device; and acquire an authorization code decrypted by the wearable device the performing submodule being configured to perform the predetermined operation interactively with the server by using the authorization code.

In a particular embodiment, the data-acquiring module comprises:
a first acquiring submodule, configure to, if a preset physical motion for verification exists, directly acquire the motion data collected by the wearable device;
or,
a second acquiring submodule, configure to, if a preset physical motion for verification does not exist, generate randomly a physical motion for verification; prompt a user about the physical motion for verification; and after the prompting about the physical motion for verification, acquire the motion data collected by the wearable device.

In a particular embodiment, the device further comprises:
a prestoring module, configured to store in advance at least one physical motion for verification, and a predetermined operation corresponding to the at least one physical motion for verification one by one, while respective physical motion for verification corresponding to a same predetermined operation or different predetermined operations.

In a particular embodiment, the device further comprises:
a binding detecting module, configured to detect whether there is a binding wearable device that has been connected; and
the data acquiring module is configured to, if there is a binding wearable device that has been connected, perform the step of acquiring motion data collected by the wearable device.

In a particular embodiment, the device further comprises:
a first binding module, configured to establish in advance a binding relationship with the wearable device.

In a particular embodiment, the first binding module comprises:
a first binding submodule, configured to acquire another motion data from the wearable device; detect whether said another motion data is matched with motion data corresponding to a physical motion for binding; if said another motion data is matched with the motion data corresponding to the physical motion for binding, establish the binding relationship with the wearable device; or,
a second binding submodule, configured to scan a two-dimensional identification code of the wearable device to obtain an identification of the wearable device; send the identification of the wearable device and a device identification of the mobile terminal to a server, and the server being configured to establish the binding relationship between the wearable device and the mobile terminal according to the identification of the wearable device and the device identification of the mobile terminal; or,
a third binding submodule, configured to send an identification of the wearable device and a user account to the server, the server being configured to bind the wearable device and the user account according to the identification of the wearable device, and establish the binding relationship between the wearable device and a mobile terminal using the user account.

According to a fourth aspect, the invention relates to a device for authorizing an operation, which is applied in a wearable device. The device includes:
a data collecting module, configured to collect motion data; and
a data providing module, configured to provide the motion data to a mobile terminal; the mobile terminal being configured to detect whether the motion data is motion data matched with a physical motion for verification; if the motion data is the motion data matched with the physical motion for verification, authorize to perform a predetermined operation corresponding to the physical motion for verification.

In a particular embodiment, the device further comprises:
a code providing module, configured to, when the motion data is the motion data matched with the physical motion for verification, provide an authorization code to the mobile terminal, the mobile terminal being configured to perform the predetermined operation interactively with a server by using the authorization code.

In a particular embodiment, the code-providing module comprises:
a third code submodule, configured to receive an encrypted authorization code acquired by the mobile terminal from the server; decrypt the encrypted authorization code to obtain a decrypted authorization code; and send the decrypted authorization code to the mobile terminal;
or,
a fourth code submodule, configured to generate an authorization code, and sending the authorization code to the mobile terminal.

In a particular embodiment, the device further comprises:
a second binding module, configured to establish in advance a binding relationship with the mobile terminal.

In a particular embodiment, the second binding module comprises:
a data collecting submodule, configured to collect another motion data; and
a data sending submodule, configured to send said another motion data to the mobile terminal, the mobile terminal being configured to detect whether said another motion data is matched with motion data corresponding to a physical motion for binding; and if said another motion data is matched with the motion data corresponding to the physical motion for binding, establish the binding relationship with the wearable device.

According to a fifth aspect, the invention relates to a device for authorizing an operation, including:
a processor; and
a memory for storing instructions executable by the processor;
wherein the processor is configured to perform:
acquiring motion data collected by a wearable device;
detecting whether the motion data is matched with motion data corresponding to a physical motion for verification; and
if the motion data is matched with the motion data corresponding to the physical motion for verification,
authorizing to perform a predetermined operation corresponding to the physical motion for verification, said operation being required to be performed interactively with a server, wherein the processor is configured to :
   - acquire an encrypted authorization code from the server;
   - send the encrypted authorization code to the wearable device;
   - acquire an authorization code decrypted by the wearable device ; and
perform a predetermined operation corresponding to the physical motion for verification.

According to a sixth aspect, the invention relates to a device for authorizing an operation, including: a sensor and a transmitter;
the sensor is configured to collect motion data; and
the transmitter is configured to provide the motion data to a mobile terminal; the mobile terminal being configured to detect whether the motion data is motion data matched with a physical motion for verification; and if the motion data is the motion data matched with the physical motion for verification, authorize to perform a predetermined operation corresponding to the physical motion for verification.

In one particular embodiment, the steps of the method for authorizing an operation are determined by computer program instructions.

Consequently, according to a seventh aspect, the invention is also directed to a computer program for executing the steps of a method for authorizing an operation when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The advantageous effects brought by the technical solutions according to the embodiments of the present disclosure include the following:
by acquiring motion data collected by a wearable device, detecting whether the motion data is matched with motion data corresponding to a physical motion for verification, and if the motion data is matched with the motion data corresponding to the physical motion for verification, authorizing to perform a predetermined operation corresponding to the physical motion for verification, it may be solved the problem that the dynamic authorization code in a form of a short message requires a complex acquiring operation, and may probably be leaked. Thereby, a simplified authorization process may be achieved, that is, authorization to perform a predetermined operation may be completed merely through a wearable device. Thus, user's property and privacy may be effectively protected, and the user security of the mobile internet may be improved.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig.1 is a schematic diagram of an implementing environment involved in the method for authorizing an operation provided by embodiments of the present disclosure;
Fig.2 is a flow chart of a method for authorizing an operation according to an exemplary embodiment;
Fig.3 is a flow chart of a method for authorizing an operation according to another exemplary embodiment;
Fig.4A is a flow chart of a method for authorizing an operation according to still another exemplary embodiment;
Fig.4B is a schematic diagram of an interface involved in the method for authorizing an operation according to still another exemplary embodiment;
Fig.4C is a schematic diagram of another interface involved in the method for authorizing an operation according to still another exemplary embodiment;
Fig.4D is a schematic diagram of an interface involved in the method for authorizing an operation according to still another exemplary embodiment;
Fig.4E is a schematic diagram of another interface involved in the method for authorizing an operation according to still another exemplary embodiment;
Fig.4F is a schematic diagram of still another interface involved in the method for authorizing an operation according to still another exemplary embodiment;
Fig.5 is a flow chart of a method for authorizing an operation according to further still another exemplary embodiment;
Fig.6 is a block diagram of a device for authorizing an operation according to an exemplary embodiment;
Fig.7 is a block diagram of a device for authorizing an operation according to another exemplary embodiment;
Fig.8 is a block diagram of a device for authorizing an operation according to still another exemplary embodiment;
Fig.9 is a block diagram of a device for authorizing an operation according to further still another exemplary embodiment;
Fig.10 is a block diagram of a device for authorizing an operation according to an exemplary embodiment; and
Fig.11 is a block diagram of a device for authorizing an operation according to another exemplary embodiment.

Through the above accompany drawings, the specific embodiments of the disclosure have been illustrated, for which a more detailed description will be given hereinafter. These drawings and textual description are not intended to limit the scope of the concept of the disclosure in any manner, but to explain the concept of the disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

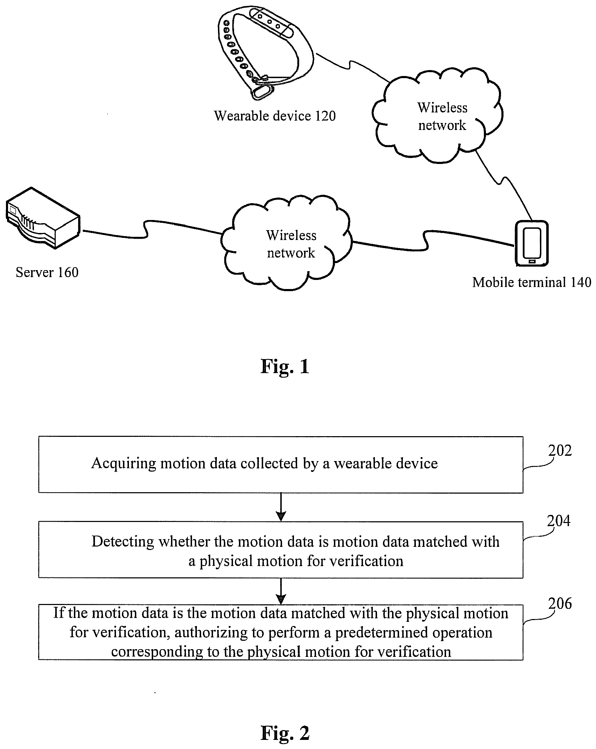

Referring to Fig.1, which is a schematic diagram of an implementing environment involved in the method for authorizing an operation provided by embodiments of the present disclosure. The implementing environment includes: a wearable device 120, a mobile terminal 140 and a server 160.

Wherein, the wearable device 120 may be connected to the mobile terminal 140 through a wireless connection. The wireless connection may be a Bluetooth connection or a WiFi (Wireless-Fidelity) connection.

The wearable device 120 is an electronic device which is capable of acquiring motion data, and sending the motion data to the mobile terminal 140. In practical implementation, the wearable device 120 may be a smart wristband, a smart watch, a smart bracelet, a smart necklace, a smart ring or a smart glass. The wearable device 120 is provided therein with a sensor configured to acquire motion data, which may be a gravity acceleration sensor, a gyroscope sensor, and etc.

The mobile terminal 140 may be connected to the server 160 through a wireless connection. The mobile terminal 140 may be an electronic device such as a smart mobile phone, a tablet computer, an electronic reader, a notebook computer or the like.

The server 160 may be one server, a server cluster consisted of a plurality of servers, or a cloud computing server center.

It should be noted that, the motion data involved in the embodiments of the present disclosure means data corresponding to a physical motion collected by the wearable device. The physical motion may include a single hit on the wearable device, double hits on the wearable device, a single shake of the wearable device, double shakes of the wearable device, drawing a triangle with the wearable device, drawing a rectangle with the wearable device, drawing other polygons with the wearable device, or the like.

The predetermined operation refers to an operation performed on the mobile terminal which involves the user's network property and/or privacy. The predetermined operation may be divided into two types: a predetermined operation required to be performed independently in a local machine, and a predetermined operation required to be performed interactively with a server.

The predetermined operation required to be performed independently in a local machine include: an operation for checking a private short massage on the mobile terminal, an operation for checking call records on the mobile terminal, an operation for checking a geographical location of the mobile terminal, launching an encrypted application program of the mobile terminal, modifying a system setting on the mobile terminal, or the like.

The predetermined operation required to be performed interactively with a server include: a payment operation performed interactively with the server, an account-transferring operation performed interactively with the server, a verification operation performed interactively with the server, a register operation performed interactively with the server, an operation for checking cloud information performed interactively with the server, or the like.

Fig.2 is a flow chart of a method for authorizing an operation according to an exemplary embodiment. In the present embodiment, the method for authorizing an operation is described as being applied to, for example, the part of the mobile terminal 140 in the implementation environment as shown in Fig.1. As shown in Fig.2, the method for authorizing an operation may include the following steps.

In step 202, motion data collected by a wearable device is acquired.

In step 204, it is detected whether the motion data is motion data matched with a physical motion for verification.

In step 206, if the motion data is the motion data matched with the physical motion for verification, it is authorized to perform a predetermined operation corresponding to the physical motion for verification.

Accordingly, in the method for authorizing an operation provided by the present embodiment, by acquiring motion data collected by a wearable device, detecting whether the motion data is motion data matched with a physical motion for verification, and if the motion data is the motion data matched with the physical motion for verification, authorizing to perform a predetermined operation corresponding to the physical motion for verification, it may be solved the problem that the dynamic authorization code in a form of a short message requires a complex acquiring operation, and may probably be leaked. Thereby, a simplified authorization process may be achieved, that is, authorization to perform a predetermined operation may be completed merely through a wearable device. Thus, user's property and privacy may be effectively protected, and the user security of the mobile internet may be improved.

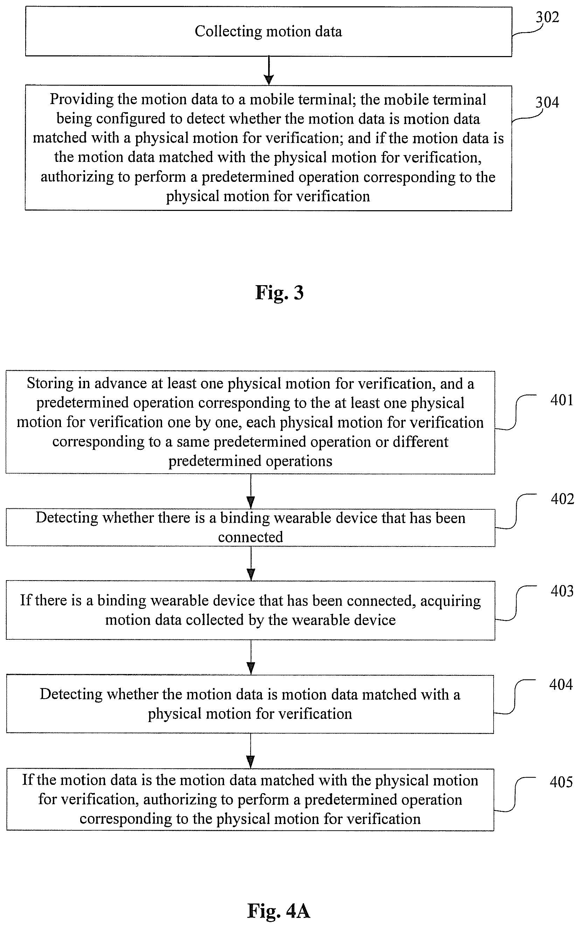

Fig.3 is a flow chart of a method for authorizing an operation according to another exemplary embodiment. In the present embodiment, the method for authorizing an operation is described as being applied to, for example, the part of the wearable device 120 in the implementation environment as shown in Fig.1. As shown in Fig.3, the method for authorizing an operation may include the following steps.

In step 302, motion data is collected.

In step 304, the motion data is provided to a mobile terminal; the mobile terminal being configured to detect whether the motion data is motion data matched with a physical motion for verification; and if the motion data is the motion data matched with the physical motion for verification, it is authorized to perform a predetermined operation corresponding to the physical motion for verification.

Accordingly, in the method for authorizing an operation provided by the present embodiment, by collecting motion data; and providing the motion data to a mobile terminal; the mobile terminal being configured to detect whether the motion data is motion data matched with a physical motion for verification; and if the motion data is the motion data matched with the physical motion for verification, authorizing to perform a predetermined operation corresponding to the physical motion for verification, it may be solved the problem that the dynamic authorization code in a form of a short message requires a complex acquiring operation, and may probably be leaked. Thereby, a simplified authorization process may be achieved, that is, authorization to perform a predetermined operation may be completed merely through a wearable device. Thus, user's property and privacy may be effectively protected, and the user security of the mobile internet may be improved.

Fig.4A is a flow chart of a method for authorizing an operation according to still another exemplary embodiment. In the present embodiment, the method for authorizing an operation is described as being applied to, for example, the wearable device 120 and the mobile terminal 140 in the implementation environment as shown in Fig.1, and the predetermined operation is, for example, an operation for checking a private picture on the local machine. As shown in Fig.4A, the method for authorizing an operation may include the following steps.

In step 401, the mobile terminal stores in advance at least one physical motion for verification, and a predetermined operation corresponding to the at least one physical motion for verification one by one, while respective physical motion for verification corresponding to a same predetermined operation or different predetermined operations.

For example, a single shake of the wearable device may be stored as a physical motion for verification, which corresponds to an operation for checking a private short message on the mobile terminal; double shakes of the wearable device may be stored as another physical motion for verification, which corresponds to an operation for checking call records on the mobile terminal; also, triple shakes of the wearable device may be stored as still another physical motion for verification, which corresponds to both of the operation for checking a private short message on the mobile terminal and the operation for checking call records on the mobile terminal.

In step 402, the mobile terminal detects whether there is a binding wearable device that has been connected.

The mobile terminal may establish in advance a binding relationship with the wearable device. Generally, the mobile terminal only establishes a connection with the binding wearable device, rather than establishing a connection with the unbinding wearable device.

The mobile terminal may detect whether currently there is a binding wearable device that has been connected.

In the present embodiment, the predetermined operation is, for example, an operation for checking a private picture on the local machine. After the user initiates an operation for checking a private picture on the mobile terminal, the mobile terminal detects whether currently there is a binding wearable device that has been connected.

In step 403, if there is a binding wearable device that has been connected, the mobile terminal acquires motion data collected by the wearable device.

As a first possible implementation, the step 403 may include but not limited to the following sub-steps.

1. If a preset physical motion for verification exists, the mobile terminal directly acquires the motion data collected by the wearable device.

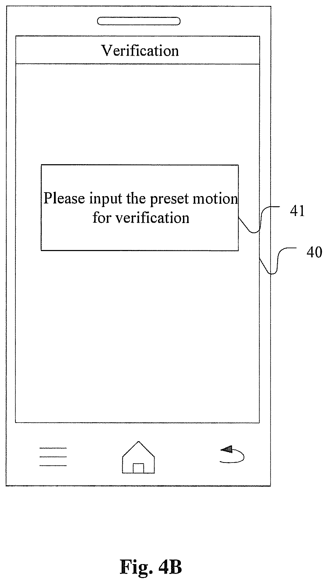

If the user has preset a physical motion for verification corresponding to the predetermined operation in the mobile terminal, (for example, in the present embodiment, the physical motion for verification is triple hits on the wearable device by the user), a dialog box 41 as shown in Fig.4B may appear on the interface 40 of the mobile terminal, prompting the user to input the physical motion for verification. The user directly hits the wearable device for three times. The wearable device sends the collected motion data of the triple hits on the wearable device to the mobile terminal. The mobile terminal acquires the motion data collected by the wearable device. Herein, "directly acquiring" means that the mobile terminal may not prompt the user about the specific motion of the physical motion for verification that needs to be performed by the user.

It should be noted that, different predetermined operations may correspond to different physical motions for verification, and the physical motion for verification corresponding to each predetermined operation may be set in default by the mobile terminal or set manually by the user.

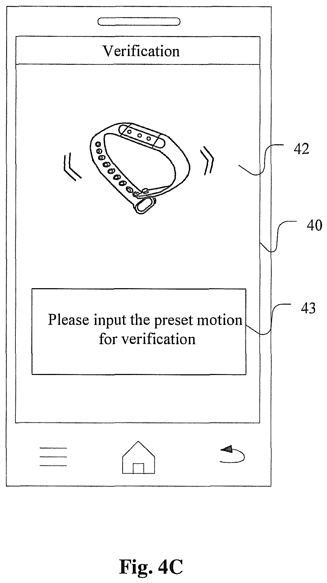

As a second possible implementation, the step 403 may include but not limited to the following sub-steps.
1. If a preset physical motion for verification does not exist, the mobile terminal generates randomly a physical motion for verification.
   If the user or the mobile terminal has not preset a physical motion for verification corresponding to the predetermined operation, the mobile terminal generates randomly a physical motion for verification. For example, a physical motion is selected randomly in a preset physical motion library.
   In this implementation, the randomly generated physical motion for verification is, for example, a single shake of the wearable device.
2. The mobile terminal prompts the user about the physical motion for verification.
   Referring to Fig.4C, an area 42 for the prompting about the randomly generated physical motion for verification is displayed on the interface 40 of the mobile terminal. In the area 42, the user is prompted that the randomly generated physical motion for verification is a single hit on the wearable device, and a dialog box 42 is displayed on the interface 40 of the mobile terminal which prompts the user to input the randomly generated physical motion for verification.
3. After the prompting about the physical motion for verification, the mobile terminal acquires the motion data collected by the wearable device.

After being prompted about the physical motion for verification, the user shakes the wearable device once according to the randomly generated physical motion for verification prompted by the mobile terminal. The wearable device sends the collected motion data of the single shake of the wearable device to the mobile terminal. The mobile terminal acquires the motion data collected by the wearable device.

It should be noted that, when a certain predetermined operation is required to be performed, the mobile terminal may detect whether a preset physical motion for verification corresponding to the predetermined operation exists. If it does exist, the first implementation is selected to perform the present step; and if it does not exist, the second implementation is selected to perform the present step.

It should be noted that, if there is no binding wearable device that has been connected, the mobile terminal needs to firstly establish a connection with the binding wearable device, and then perform the above step 403.

In step 404, the mobile terminal detects whether the motion data is motion data matched with the physical motion for verification.

After it acquires the motion data collected by the wearable device, the mobile terminal detects whether the motion data is motion data matched with the physical motion for verification.

In step 405, if the motion data is the motion data matched with the physical motion for verification, it is authorized to perform a predetermined operation corresponding to the physical motion for verification.

In the present embodiment, since the motion data is the motion data matched with the physical motion for verification, and the predetermined operation is the operation for checking a private picture in the local machine that is required to be performed independently by the local machine, the mobile terminal authorizes to perform the predetermined operation corresponding to the physical motion for verification. That is, the mobile terminal permits the user to check the private picture in the local machine.

Accordingly, in the method for authorizing an operation provided by the present embodiment, by acquiring motion data collected by a wearable device, detecting whether the motion data is motion data matched with a physical motion for verification, and if the motion data is the motion data matched with the physical motion for verification, authorizing to perform a predetermined operation corresponding to the physical motion for verification, it may be solved the problem that the dynamic authorization code in a form of a short message requires a complex acquiring operation, and may probably be leaked. Thereby, a simplified authorization process may be achieved, that is, authorization to perform a predetermined operation may be completed merely through a wearable device. Thus, user's property and privacy may be effectively protected, and the user security of the mobile internet may be improved.

It should be noted that, before the wearable device is connected to the mobile terminal, a binding relationship needs to be established in advance with the wearable device.

In the implementation of the present disclosure, a binding relationship between the wearable device and the mobile terminal may be established in any of the following three manners.

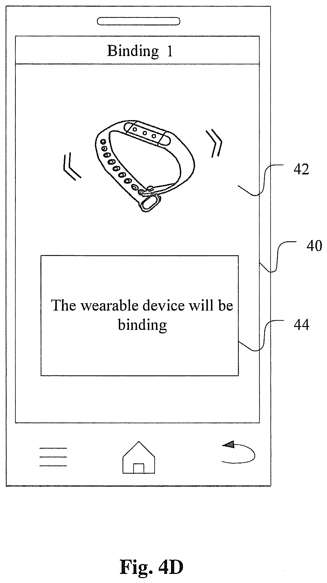

For a first manner, referring to Fig.4D, the mobile terminal presets randomly a physical motion for binding, and displays the physical motion for binding in the area 42 on the interface 40 of the mobile terminal. The user operates the wearable device according to the physical motion for binding. The wearable device collects the motion data generated by the user, and sends the motion data to the mobile terminal. The mobile terminal acquires the motion data collected by the wearable device. The mobile terminal detects whether the motion data is motion data matched with the physical motion for binding. If the motion data is the motion data matched with the physical motion for binding, the mobile terminal establishes the binding relationship with the wearable device, and prompts the user through a prompt box 44 about that the wearable device is binding on the interface 40 of the mobile terminal.

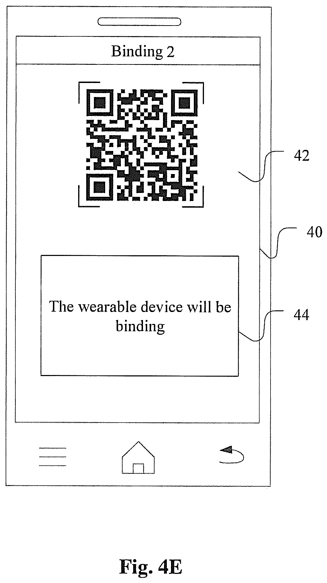

For a second manner, referring to Fig.4E, a two-dimensional identification code may be preset on a housing or a package of the wearable device, and the two-dimensional identification code corresponds to an identification of the wearable device. The mobile terminal may scan the two-dimensional identification code of the wearable device, and displays the identification of the wearable device in the area 42 on the interface 40 of the mobile terminal. The mobile terminal sends the identification of the wearable device and a device identification of the mobile terminal to a server which is configured to establish the binding relationship between the wearable device and the mobile terminal according to the identification of the wearable device and the device identification of the mobile terminal. Eventually, the user is prompted about that the wearable device is binding in a prompt box 44 on the interface 40 of the mobile terminal.

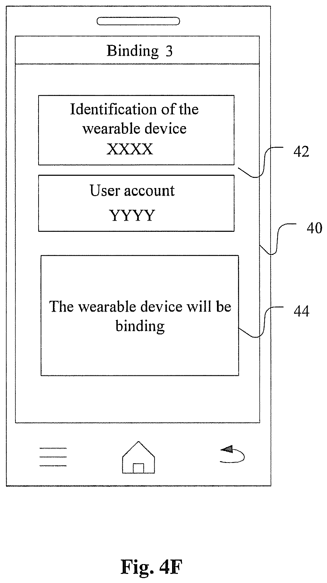

For a third manner, referring to Fig.4F, the user inputs the identification of the wearable device and a user account in the area 42 on the interface 40 of the mobile terminal. The mobile terminal sends the identification of the wearable device and the user account to the server which is configured to bind the wearable device and the user account according to the identification of the wearable device, and establish the binding relationship between the wearable device and the mobile terminal using the user account. Eventually, the user is prompted about that the wearable device is binding in a prompt box 44 on the interface 40 of the mobile terminal.

In the present embodiment, the first manner may be adopted to establish the binding relationship between the wearable device and the mobile terminal.

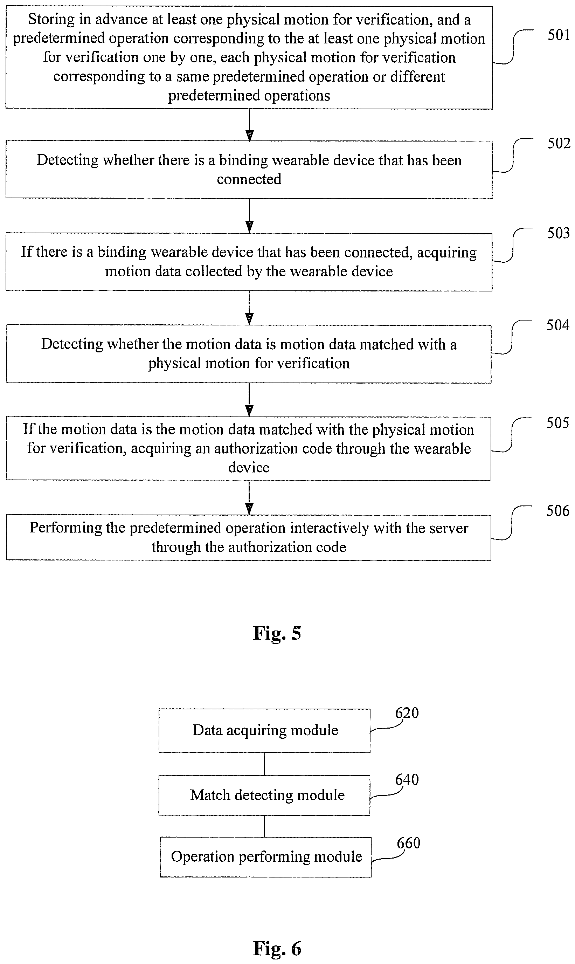

Fig.5 is a flow chart of a method for authorizing an operation according to further still another exemplary embodiment. In the present embodiment, the method for authorizing an operation is described as being applied to, for example, the wearable device 120 and the mobile terminal 140 in the implementation environment as shown in Fig.1, and the predetermined operation is, for example, a payment operation which is performed interactively with a server. As shown in Fig.5, the method for authorizing an operation may include the following steps.

In step 501, the mobile terminal stores in advance at least one physical motion for verification, and a predetermined operation corresponding to the at least one physical motion for verification one by one, while respective physical motion for verification corresponding to a same predetermined operation or different predetermined operations.

For example, a single shake of the wearable device may be stored as a physical motion for verification, which corresponds to an operation for checking a private short message on the mobile terminal; double shakes of the wearable device may be stored as another physical motion for verification, which corresponds to an operation for checking call records on the mobile terminal; also, triple shakes of the wearable device may be stored as still another physical motion for verification, which corresponds to both of the operation for checking a private short message on the mobile terminal and the operation for checking call records on the mobile terminal.

In step 502, the mobile terminal detects whether there is a binding wearable device that has been connected.

The mobile terminal may establish in advance a binding relationship with the wearable device. Generally, the mobile terminal only establishes a connection with the binding wearable device, rather than establishing a connection with the unbinding wearable device.

The mobile terminal may detect whether currently there is a binding wearable device that has been connected.

In the present embodiment, the predetermined operation is, for example, a payment operation which is performed interactively with a server. After the user initiates a payment operation which is performed interactively with a server, the mobile terminal detects whether currently there is a binding wearable device that has been connected.

In step 503, if there is a binding wearable device that has been connected, the mobile terminal acquires motion data collected by the wearable device.

As a first possible implementation, the step 503 may include but not limited to the following sub-steps.
1. If a preset physical motion for verification exists, the mobile terminal directly acquires the motion data collected by the wearable device.

If the user has preset a physical motion for verification corresponding to the predetermined operation in the mobile terminal, (for example, in the present embodiment, the physical motion for verification is triple hits on the wearable device by the user), the interface of the mobile terminal prompts the user to input the physical motion for verification. The user directly hits the wearable device for three times. The wearable device sends the collected motion data of the triple hits on the wearable device to the mobile terminal. The mobile terminal acquires the motion data collected by the wearable device. Herein, "directly acquiring" means that the mobile terminal may not prompt the user about the specific motion of the physical motion for verification that needs to be performed by the user.

It should be noted that, different predetermined operations may correspond to different physical motions for verification, and the physical motion for verification corresponding to each predetermined operation may be set in default by the mobile terminal or set manually by the user.

As a second possible implementation, the step 503 may include but not limited to the following sub-steps.
1. If a preset physical motion for verification does not exist, the mobile terminal generates randomly a physical motion for verification.
   If the user or the mobile terminal has not preset a physical motion for verification corresponding to the predetermined operation, the mobile terminal generates randomly a physical motion for verification. For example, a physical motion is selected randomly in a preset physical motion library.
   In this implementation, the randomly generated physical motion for verification is, for example, a single shake of the wearable device.
2. The mobile terminal prompts the user about the physical motion for verification to.
   A prompting message is displayed on the interface of the mobile terminal, prompting the user about that the randomly generated physical motion for verification is a single shake of the wearable device, and prompting the user to input the randomly generated physical motion for verification.
3. After the prompting about the physical motion for verification, the mobile terminal acquires the motion data collected by the wearable device.

After being prompted about the physical motion for verification, the user shakes the wearable device once according to the randomly generated physical motion for verification prompted by the mobile terminal. The wearable device sends the collected motion data of the single shake of the wearable device to the mobile terminal. The mobile terminal acquires the motion data collected by the wearable device.

It should be noted that, when a certain predetermined operation is required to be performed, the mobile terminal may detect whether a preset physical motion for verification corresponding to the predetermined operation exists. If it does exist, the first implementation is selected to perform the present step; and if it does not exist, the second implementation is selected to perform the present step.

It should be noted that, if there is no binding wearable device that has been connected, the mobile terminal needs to firstly establish a connection with the binding wearable device, and then perform the above step 503.

In step 504, the mobile terminal detects whether the motion data is motion data matched with the physical motion for verification.

After it acquires the motion data collected by the wearable device, the mobile terminal detects whether the motion data is motion data matched with the physical motion for verification.

In step 505, if the motion data is the motion data matched with the physical motion for verification, a code is acquired through the wearable device.

In the present embodiment, since the motion data is the motion data matched with the physical motion for verification, and the predetermined operation is the payment operation which is performed interactively with the server, the mobile terminal may acquire an authorization code through the wearable device.

As a first possible implementation, the step 505 may include but not limited to the following sub-steps.
1. The mobile terminal acquires an encrypted authorization code from the server.
   The server generates the encrypted authorization code according to an encryption key, and the mobile terminal acquires the encrypted authorization code from the server.
2. The mobile terminal sends the encrypted authorization code to the wearable device.
   The mobile terminal sends the encrypted authorization code to the wearable device. The wearable device acquires a decrypted authorization code according to a decryption key, and sends the decrypted authorization code to the mobile terminal.
3. The mobile terminal acquires the authorization code decrypted by the wearable device.

As a second possible implementation, the step 505 may include but not limited to the following sub-steps.
1. The mobile terminal acquires an authorization code generated by the wearable device.

If the motion data is the motion data matched with the physical motion for verification, the mobile terminal may send an indication for a successful verification to the wearable device. After it receives the indication for a successful verification, the wearable device generates an authorization code through a predetermined program, and then sends the authorization code to the mobile terminal.

It should be noted that, to acquire an authorization code through the wearable device, if the authorization code needs to be generated by the server, the first implementation is adopted to perform the present step; and if the authorization code needs not to be generated by the server, the second implementation is adopted to perform the present step

In step 506, the predetermined operation is performed interactively with the server by using the authorization code.

After it acquires the authorization code from the wearable device, the mobile terminal sends the authorization code and the request for the payment operation which is performed interactively with the server to the server. The server detects whether the authorization code is correct. If the authorization code is correct, the payment operation is allowed to be performed; and if the authorization code is not correct, the payment operation is disallowed to be performed.

Accordingly, in the method for authorizing an operation provided by the present embodiment, by acquiring motion data collected by a wearable device, detecting whether the motion data is motion data matched with a physical motion for verification, and if the motion data is the motion data matched with the physical motion for verification, authorizing to perform a predetermined operation corresponding to the physical motion for verification, it may be solved the problem that the dynamic authorization code in a form of a short message requires a complex acquiring operation, and may probably be leaked. Thereby, a simplified authorization process may be achieved, that is, authorization to perform a predetermined operation may be completed merely through a wearable device. Thus, user's property and privacy may be effectively protected, and the user security of the mobile internet may be improved.

Also, in the method for authorizing an operation provided by the present embodiment, an authorization code may be acquired through the wearable device, thus it may be achieved the effect that the authorization code is not likely to be leaked. Moreover, since the wearable device participates in the process of acquiring the authorization code, the user security of the mobile internet may be improved.

It should be noted that, before the wearable device is connected to the mobile terminal, a binding relationship needs to be established in advance between the wearable device and the mobile terminal.

In the implementation of the present disclosure, a binding relationship between the wearable device and the mobile terminal may be established in a manner described in the above embodiment, which will not be repeated in the present embodiment.

In the present embodiment, the first manner may be adopted to establish the binding relationship between the wearable device and the mobile terminal.

It should be further noted that, since in step 504, the physical motion corresponding to the predetermined operation may be preset by the user. In other words, prior to step 504, the mobile terminal may perform the following steps.
1. The mobile terminal receives a setting instruction from the user, and the setting instruction serving to set a physical motion for verification corresponding to a certain predetermined operation.
   For example, the mobile terminal displays 10 candidate physical motions for verification, and then the user selects one of the candidate physical motions for verification as the physical motion for verification corresponding to the certain predetermined operation.
2. The mobile terminal stores a corresponding relationship between the predetermined operation and the physical motion for verification.

Different predetermined operations may correspond to different physical motions for verification, one predetermined operation may correspond to a plurality of physical motions for verification, and one physical motion for verification may also correspond to a plurality of predetermined operations.

It also should be further noted that, the mobile terminal may also release the binding with the binding wearable device. There may be three manners for releasing the binding, respectively corresponding to the three manners for establishing the binding in the above embodiment, as follows.

For a first manner, the wearable device acquires another motion data, and sends said another motion data to the mobile terminal which is configured to detect whether said another motion data is matched with the motion data corresponding to a physical motion for releasing a binding. If said another motion data is matched with the motion data corresponding to the physical motion for releasing a binding, the binding relationship between the mobile terminal and the wearable device is released. The physical motion for releasing a binding may be set after the physical motion for binding is set. It should be noted that, once the physical motion for releasing a binding is successfully set, it may not be modified.

For a second manner, a two-dimensional identification code may be preset on a housing or a package of the wearable device, which corresponds to an identification of the wearable device. The mobile terminal may scan again the two-dimensional identification code of the wearable device, and obtain the identification of the wearable device. The mobile terminal sends a request for releasing a binding to the server which carries the identification of the wearable device and a device identification of the mobile terminal, and the server is configured to release the binding relationship between the wearable device and the mobile terminal according to the identification of the wearable device and the device identification of the mobile terminal.

For a third manner, the user inputs again the identification of the wearable device and a user account on the interface of the mobile terminal. The mobile terminal sends a request for releasing a binding to the server which carries the identification of the wearable device and the user account, and the server is configured to release the binding between the wearable device and the user account according to the identification of the wearable device, and release the binding relationship between the wearable device and the mobile terminal using the user account.

The following are device embodiments of the present disclosure, which may be configured to perform the method embodiments of the present disclosure. For details that are not disclosed in the device embodiments of the present disclosure, reference may be made to the method embodiments of the present disclosure.

Fig.6 is a block diagram of a device for authorizing an operation according to an exemplary embodiment. As shown in Fig.6, the device for authorizing an operation may be implemented as a part or a whole of the mobile terminal as shown in Fig.1 in a form of software, hardware or combination of the both. The device include:
a data acquiring module 620, configured to acquire motion data collected by a wearable device;
a match detecting module 640, configured to detect whether the motion data is motion data matched with a physical motion for verification; and
an operation performing module 660, configured to, if the motion data is the motion data matched with the physical motion for verification, authorize to perform a predetermined operation corresponding to the physical motion for verification.

Accordingly, in the device for authorizing an operation provided by the present embodiment, by acquiring motion data collected by a wearable device, detecting whether the motion data is motion data matched with a physical motion for verification, and if the motion data is the motion data matched with the physical motion for verification, authorizing to perform a predetermined operation corresponding to the physical motion for verification, it may be solved the problem that the dynamic authorization code in a form of a short message requires a complex acquiring operation, and may probably be leaked. Thereby, a simplified authorization process may be achieved, that is, authorization to perform a predetermined operation may be completed merely through a wearable device. Thus, user's property and privacy may be effectively protected, and the user security of the mobile internet may be improved.

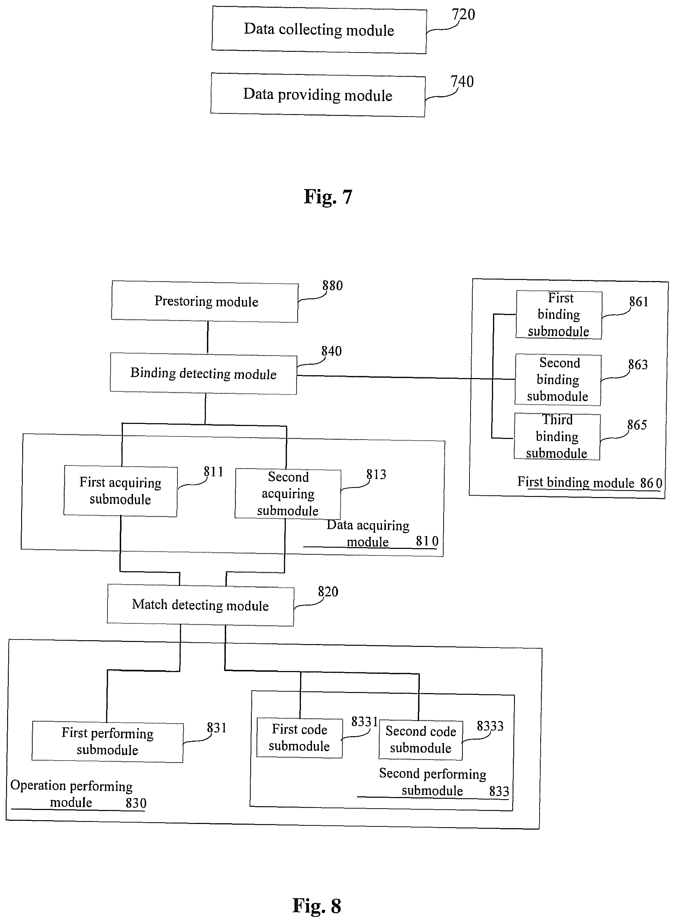

Fig.7 is a block diagram of a device for authorizing an operation according to another exemplary embodiment. As shown in Fig.7, the device for authorizing an operation may be implemented as a part or a whole of the wearable device shown in Fig.1 in a form of software, hardware or combination of the both. The device include:
a data collecting module 720, configured to collect motion data; and
a data providing module 740, configured to provide the motion data to a mobile terminal; the mobile terminal being configured to detect whether the motion data is motion data matched with a physical motion for verification; if the motion data is the motion data matched with the physical motion for verification, authorize to perform a predetermined operation corresponding to the physical motion for verification.

Accordingly, in the device for authorizing an operation provided by the present embodiment, by collecting motion data; and providing the motion data to a mobile terminal; the mobile terminal being configured to detect whether the motion data is motion data matched with a physical motion for verification; and if the motion data is the motion data matched with the physical motion for verification, authorizing to perform a predetermined operation corresponding to the physical motion for verification, it may be solved the problem that the dynamic authorization code in a form of a short message requires a complex acquiring operation, and may probably be leaked. Thereby, a simplified authorization process may be achieved, that is, authorization to perform a predetermined operation may be completed merely through a wearable device. Thus, user's property and privacy may be effectively protected, and the user security of the mobile internet may be improved.

Fig.8 is a block diagram of a device for authorizing an operation according to still another exemplary embodiment. As shown in Fig.8, the device for authorizing an operation may be implemented as a part or a whole of the mobile terminal as shown in Fig.1 in a form of software, hardware or combination of the both. The device include:
a data acquiring module 810, configured to acquire motion data collected by a wearable device;
a match detecting module 820, configured to detect whether the motion data is motion data matched with a physical motion for verification; and
an operation performing module 830, configured to, if the motion data is the motion data matched with the physical motion for verification, authorize to perform a predetermined operation corresponding to the physical motion for verification.

Optionally, the operation performing module 830 includes:
a first performing submodule 831, configured to, if the predetermined operation is a predetermined operation required to be performed independently in a local machine, directly perform the predetermined operation; and
a second performing submodule 833, configured to, if the predetermined operation is a predetermined operation required to be performed interactively with a server, acquire an authorization code through the wearable device; and perform the predetermined operation interactively with the server by using the authorization code.

Optionally, the second performing submodule 833 includes:
a first code submodule 8331, configured to acquire an encrypted authorization code from the server; send the encrypted authorization code to the wearable device; and acquire an authorization code decrypted by the wearable device;
or,
a second code submodule 8333, configured to acquire an authorization code generated by the wearable device.

Optionally, the data acquiring module 810 includes:
a first acquiring submodule 811, configure to, if a preset physical motion for verification exists, directly acquire motion data collected by the wearable device;
or,
a second acquiring submodule 813, configure to generate randomly a physical motion for verification; prompt a user about the physical motion for verification; and after the prompting about the physical motion for verification, acquire the motion data collected by the wearable device.

Optionally, the device further includes:
a binding detecting module 840, configured to detect whether there is a binding wearable device that has been connected; and
the data acquiring module 810 is configured to, if there is a binding wearable device that has been connected, perform the step of acquiring motion data collected by the wearable device.

Optionally, the device further includes:
a first binding module 860, configured to establish in advance a binding relationship with the wearable device.

Optionally, the first binding module 860 includes:
a first binding submodule 861, configured to acquire another motion data of the wearable device; detect whether said another motion data is matched with motion data corresponding to a physical motion for binding; if said another motion data is matched with the motion data corresponding to the physical motion for binding, establish the binding relationship with the wearable device; or,
a second binding submodule 863, configured to scan a two-dimensional identification code of the wearable device to obtain an identification of the wearable device; send the identification of the wearable device and a device identification of a local terminal to a server, and the server being configured to establish the binding relationship between the wearable device and the local terminal according to the identification of the wearable device and the device identification of the local terminal; or,
a third binding submodule 865, configured to send an identification of the wearable device and a user account to the server, the server being configured to bind the wearable device and the user account according to the identification of the wearable device, and establish the binding relationship between the wearable device and a mobile terminal using the user account.

Optionally, the device further includes:
a prestoring module 880, configured to store in advance at least one physical motion for verification, and a predetermined operation corresponding to the at least one physical motion for verification one by one, while respective physical motion for verification corresponding to a same predetermined operation or different predetermined operations.

Accordingly, in the device for authorizing an operation provided by the present embodiment, by acquiring motion data collected by a wearable device, detecting whether the motion data is motion data matched with a physical motion for verification, and if the motion data is the motion data matched with the physical motion for verification, authorizing to perform a predetermined operation corresponding to the physical motion for verification, it may be solved the problem that the dynamic authorization code in a form of a short message requires a complex acquiring operation, and may probably be leaked. Thereby, a simplified authorization process may be achieved, that is, authorization to perform a predetermined operation may be completed merely through a wearable device. Thus, user's property and privacy may be effectively protected, and the user security of the mobile internet may be improved.

Also, in the device for authorizing an operation provided by the present embodiment, acquiring an authorization code may be acquired through the wearable device, thus it may be achieved the effect that the authorization code is not likely to be leaked. Moreover, since the wearable device participates in the process of acquiring the authorization code, the user security of the mobile internet may be improved.

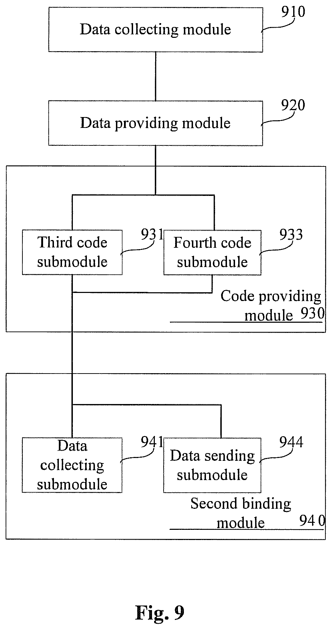

Fig.9 is a block diagram of a device for authorizing an operation according to further still another exemplary embodiment. As shown in Fig.9, the device for authorizing an operation may be implemented as a part or a whole of the wearable device shown in Fig.1 in a form of software, hardware or combination of the both. The device includes:
a data collecting module 910, configured to collect motion data; and
a data providing module 920, configured to provide the motion data to a mobile terminal; the mobile terminal being configured to detect whether the motion data is motion data matched with a physical motion for verification; if the motion data is the motion data matched with the physical motion for verification, authorize to perform a predetermined operation corresponding to the physical motion for verification.

Optionally, the device further includes:
a code providing module 930, configured to, when the motion data is the motion data matched with the physical motion for verification, provide an authorization code to the mobile terminal, the mobile terminal being configured to perform the predetermined operation interactively with a server by using the authorization code.

Optionally, the code providing module 930 includes:
a third code submodule 931, configured to receive an encrypted authorization code acquired by the mobile terminal from the server; decrypt the encrypted authorization code to obtain a decrypted authorization code; and send the decrypted authorization code to the mobile terminal;
or,
a fourth code submodule 933, configured to generate an authorization code, and send the authorization code to the mobile terminal.

Optionally, the device further includes:
a second binding module 940, configured to establish in advance a binding relationship with the mobile terminal.

Optionally, the second binding module 940 includes:
a data collecting submodule 941, configured to collect another motion data; and
a data sending submodule 943, configured to send said another motion data to the mobile terminal, the mobile terminal being configured to detect whether said another motion data is matched with motion data corresponding to a physical motion for binding; and if said another motion data is matched with the motion data corresponding to the physical motion for binding, establish the binding relationship with the wearable device.

Accordingly, in the device for authorizing an operation provided by the present embodiment, by acquiring motion data collected by a wearable device, detecting whether the motion data is motion data matched with a physical motion for verification, and if the motion data is the motion data matched with the physical motion for verification, authorizing to perform a predetermined operation corresponding to the physical motion for verification, it may be solved the problem that the dynamic authorization code in a form of a short message requires a complex acquiring operation, and may probably be leaked. Thereby, a simplified authorization process may be achieved, that is, authorization to perform a predetermined operation may be completed merely through a wearable device. Thus, user's property and privacy may be effectively protected, and the user security of the mobile internet may be improved.

Also, in the device for authorizing an operation provided by the present embodiment, an authorization code may be acquired by the wearable device, thus it may be achieved the effect that the authorization code is not likely to be leaked. Moreover, since the wearable device participates in the process of acquiring the authorization code, the user security of the mobile internet may be improved.

With respect to the device in the above embodiment, specific operations performed by each modules have been described in detail in the embodiments of related method, and detailed description are omitted herein.

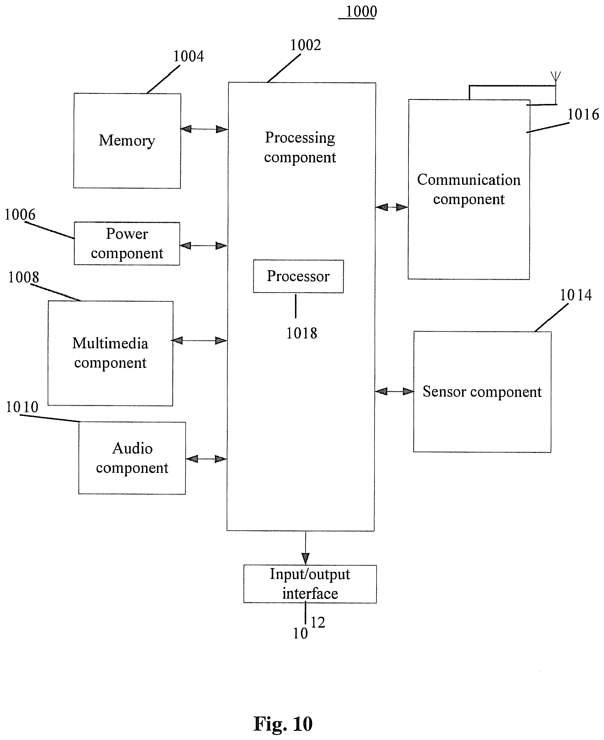

Fig.10 is a block diagram of a device 1000 for authorizing an operation according to an exemplary embodiment. The device is for example used in a mobile terminal. For example, the device 1000 may be a mobile phone, a computer, a digital broadcast terminal, a messaging device, a gaming console, a tablet, a medical device, an exercise equipment, a personal digital assistant, and the like.

Referring to Fig.10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1018 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/close status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the method for authorizing an operation as shown in Fig.2 or 4A.

In exemplary embodiments, there is also provided a non-transitory computer-readable storage medium including instructions, such as included in the memory 1004, executable by the processor 1018 in the device 1000, for performing the above-described methods. For example, the non-transitory computer-readable storage medium may be a ROM, a RAM, a CD-ROM, a magnetic tape, a floppy disc, an optical data storage device, and the like.

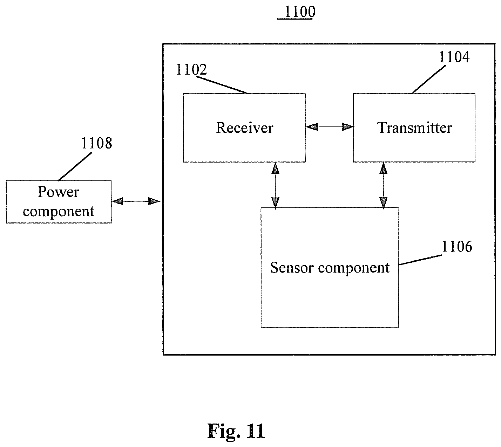

Fig.11 is a block diagram of another device 1100 for authorizing an operation according to an exemplary embodiment. The device is for example used in a wearable device. For example, the device 1100 may be a smart wristband, a smart watch, a smart bracelet, a smart necklace, a smart ring, a smart glass or the like. Referring to Fig.11, the device 1100 may include the following one or more components: a receiver 1102, a transmitter 1104, a sensor component 1106 and a power component 1108.

The receiver 1102 is configured as a circuit capable of receiving signal from transmission medium, and decoding the received signal or converting them for driving the device 1100. In the device 1100, the transmission medium is generally in a wireless form.

The transmitter 1104 is configured as a circuit capable of receiving signal or data and converting them into wireless transmission medium. The transmitter 1104 may send radio waves via an antenna to support operations of the device 1100. The transmitter 1104 generates alternating currents which act on the antenna. The antenna generates radio waves and sends them to space. The transmitter 1104 is widely used in a variety of devices which communicate using various radio waves.

Wherein, the receiver 1102 and the transmitter 1104 may be implemented by Bluetooth chip compliant with the Bluetooth 4.0 specification.

The sensor component 1106 includes one or more sensors to provide status assessments of various aspects of the device 1100. For instance, the sensor component 1106 may detect an open/close status of the device 1100, relative positioning of components. For example, the sensor component 1106 may detect an orientation or an acceleration/ deceleration of the device 1100, and a change in temperature of the device 1100. The sensor component 1106 may include a proximity sensor configured to detect the presence of nearby objects without any physical contact. The sensor component 1106 may also include a light sensor, an accelerometer sensor, a gyroscope sensor, a magnetic sensor, a pressure sensor, or a temperature sensor.

The power component 1108 provides power to various components of the device 1100. The power component 1108 may include a power management system, one or more power sources, and any other components associated with the generation, management, and distribution of power in the device 1100.

In an exemplary embodiment, the device 1100 may configured to perform the method for authorizing an operation as shown in Fig.3 or 5.

## Claims

1. A method for authorizing an operation, implemented in a mobile terminal, **characterized in that**, the method comprises:
acquiring (202) motion data collected by a wearable device;
detecting (204, 404, 504) whether the motion data is matched with a physical motion for verification; and
if the motion data is matched with the physical motion for verification, authorizing (206, 405) to perform a predetermined operation corresponding to the physical motion for verification, said operation being required to be performed interactively with a server, said method comprising :
- acquiring an encrypted authorization code from the server;
- sending the encrypted authorization code to the wearable device;
- acquiring an authorization code decrypted by the wearable device ; and
- performing (506) the predetermined operation interactively with the server by using the authorization code.

2. The method according to claim 1, **characterized in that**, the step of acquiring motion data collected by a wearable device, comprising:
if a preset physical motion for verification exists, directly acquiring the motion data collected by the wearable device;
or,
if a preset physical motion for verification does not exist, generating randomly a physical motion for verification; prompting a user about the physical motion for verification; and after the prompting about the physical motion for verification, acquiring the motion data collected by the wearable device.

3. The method according to any one of claims 1 to 2, **characterized in that**, the method further comprises:
storing (401, 501) in advance at least one physical motion for verification, and a predetermined operation corresponding to the at least one physical motion for verification one by one, while respective physical motion for verification corresponding to a same predetermined operation or different predetermined operations.

4. The method according to any one of claims 1 to 3, **characterized in that**,
the method further comprises:
detecting (502) whether there is a binding wearable device that has been connected; and
if there is a binding wearable device that has been connected, performing the step of acquiring motion data collected by the wearable device (503); and/or
the method further comprises:
establishing in advance a binding relationship with the wearable device.

5. The method according to claim 4, **characterized in that**, the step of establishing in advance a binding relationship with the wearable device, comprises:
acquiring another motion data from the wearable device; detecting whether said another motion data is matched with a physical motion for binding; and if said another motion data is matched with the physical motion for binding, establishing the binding relationship with the wearable device; or,
scanning a two-dimensional identification code of the wearable device to obtain an identification of the wearable device; sending the identification of the wearable device and a device identification of the mobile terminal to a server, and the server being configured to establish the binding relationship between the wearable device and the mobile terminal according to the identification of the wearable device and the device identification of the mobile terminal; or,
sending an identification of the wearable device and a user account to the server, the server being configured to bind the wearable device and the user account according to the identification of the wearable device, and establish the binding relationship between the wearable device and a mobile terminal using the user account.

6. A device for authorizing an operation in a mobile terminal, **characterized in that**, the device comprises:
a data acquiring module (620, 810), configured to acquire motion data collected by a wearable device;
a match detecting module (640, 820), configured to detect whether the motion data is matched with a physical motion for verification; and
an operation performing module (660, 830), configured to, if the motion data is matched with the physical motion for verification, authorize to perform a predetermined operation corresponding to the physical motion for verification, wherein the operation performing module comprises:
a performing submodule (833) comprising a first code submodule (8331), configured to acquire an encrypted authorization code from the server; send the encrypted authorization code to the wearable device; and acquire an authorization code decrypted by the wearable device, the performing submodule being configured to perform the predetermined operation interactively with the server by using the authorization code.

7. The device according to claim 6, **characterized in that**, the data acquiring module comprising:
a first acquiring submodule (811), configure to, if a preset physical motion for verification exists, directly acquire the motion data collected by the wearable device;
or,
a second acquiring submodule (813), configure to, if a preset physical motion for verification does not exist, generate randomly a physical motion for verification; prompt a user about the physical motion for verification; and after the prompting about the physical motion for verification, acquire the motion data collected by the wearable device.

8. The device according to any one of claims 6 to 7, **characterized in that**, the device further comprises:
a prestoring module (880), configured to store in advance at least one physical motion for verification, and a predetermined operation corresponding to the at least one physical motion for verification one by one, while respective physical motion for verification corresponding to a same predetermined operation or different predetermined operations.

9. A mobile terminal for authorizing an operation, **characterized in that**, the mobile terminal comprises:
a processor; and
a memory for storing instructions executable by the processor;
wherein the processor is configured to perform:
acquiring motion data collected by a wearable device;
detecting whether the motion data is matched with a physical motion for verification; and
if the motion data is matched with the physical motion for verification, authorizing to perform a predetermined operation corresponding to the physical motion for verification, said operation being required to be performed interactively with a server, wherein the processor is configured to :
- acquire an encrypted authorization code from the server;
- send the encrypted authorization code to the wearable device;
- acquire an authorization code decrypted by the wearable device ; and
perform a predetermined operation corresponding to the physical motion for verification.

10. A computer program including instructions for executing the steps of method for authorizing an operation according to any one of claims 1 to 5 when said program is executed by a computer.

11. A recording medium readable by a computer and having recorded thereon :
- a computer program including instructions for executing the steps of method for authorizing an operation for displaying wireless device list according to any one of claims 1 to 5.

## Patentansprüche

1. Verfahren zum Autorisieren einer Operation, die in einem mobilen Endgerät implementiert wird, **dadurch gekennzeichnet, dass** das Verfahren aufweist:
Erfassen (202) von Bewegungsdaten, die durch eine tragbare Vorrichtung gesammelt werden,
Ermitteln (204, 404, 504), ob die Bewegungsdaten mit einer physikalischen Bewegung zur Verifikation übereinstimmen, und
wenn die Bewegungsdaten mit der physikalischen Bewegung zur Verifikation übereinstimmen, Autorisieren (206, 405), eine vorgegebene Operation durchzuführen, die der physikalischen Bewegung zur Verifikation entspricht, wobei es erforderlich ist, dass die Operation interaktiv mit einem Server durchgeführt wird, wobei das Verfahren aufweist:
- Erfassen eines verschlüsselten Autorisierungscodes vom Server,
- Senden des verschlüsselten Autorisierungscodes an die tragbare Vorrichtung,
- Erfassen eines durch die tragbare Vorrichtung verschlüsselten Autorisierungscodes und
- Durchführen (506) der vorgegebenen Operation interaktiv mit dem Server durch Verwenden des Autorisierungscodes.

2. Verfahren nach Anspruch 1, **dadurch gekennzeichnet, dass** der Schritt des Erfassens der Bewegungsdaten, die durch eine tragbare Vorrichtung gesammelt werden, aufweist:
wenn eine voreingestellte physikalische Bewegung zur Verifikation vorhanden ist, direktes Erfassen der durch die tragbare Vorrichtung gesammelten Bewegungsdaten,
oder,
wenn keine voreingestellte physikalische Bewegung zur Verifikation vorhanden ist, zufälliges Erzeugen einer physikalischen Bewegung zur Verifikation, Auffordern eines Benutzers zur Eingabe der physikalischen Bewegung zur Verifikation, und nach dem Auffordern zur Eingabe der physikalischen Bewegung zur Verifikation, Erfassen der durch die tragbare Vorrichtung gesammelten Bewegungsdaten.

3. Verfahren nach einem der Ansprüche 1 bis 2, **dadurch gekennzeichnet, dass** das Verfahren ferner aufweist:
Speichern (401, 501) im Voraus der Reihe nach mindestens einer physikalischen Bewegung zur Verifikation und einer vorgegebenen Operation, die der mindestens einen physikalischen Bewegung zur Verifikation entspricht, während eine jeweilige physikalische Bewegung zur Verifikation derselben vorgegebenen Operation oder anderen vorgegebenen Operationen entspricht.

4. Verfahren nach einem der Ansprüche 1 bis 3, **dadurch gekennzeichnet, dass** das Verfahren ferner aufweist:
Ermitteln (502), ob es eine bindende tragbare Vorrichtung gibt, die verbunden worden ist, und wenn es eine bindende tragbare Vorrichtung gibt, die verbunden worden ist, Durchführen des Schritts zum Erfassen der durch die tragbare Vorrichtung (503) gesammelten Bewegungsdaten, und/oder
das Verfahren ferner aufweist:
Herstellen im Voraus einer bindenden Beziehung mit der tragbaren Vorrichtung.

5. Verfahren nach Anspruch 4, **dadurch gekennzeichnet, dass** der Schritt des Herstellens einer bindenden Beziehung mit der tragbaren Vorrichtung im Voraus aufweist:
Erfassen von anderen Bewegungsdaten von der tragbaren Vorrichtung, Ermitteln, ob die anderen Bewegungsdaten mit einer physikalischen Bewegung zum Binden übereinstimmen, und wenn die anderen Bewegungsdaten mit der physikalischen Bewegung zum Binden übereinstimmen, Herstellen der bindenden Beziehung mit der tragbaren Vorrichtung, oder
Scannen eines zweidimensionalen Identifikationscodes der tragbaren Vorrichtung, um eine Identifikation der tragbaren Vorrichtung zu erhalten, Senden der Identifikation der tragbaren Vorrichtung und einer Vorrichtungsidentifikation des mobilen Endgeräts an einen Server, und wobei der Server konfiguriert ist, die bindende Beziehung zwischen der tragbaren Vorrichtung und dem mobilen Endgerät gemäß der Identifikation der tragbaren Vorrichtung und der Vorrichtungsidentifikation des mobilen Endgeräts herzustellen, oder
Senden einer Identifikation der tragbaren Vorrichtung und eines Benutzerkontos an den Server, wobei der Server konfiguriert ist, die tragbare Vorrichtung und das Benutzerkonto gemäß der Identifikation der tragbaren Vorrichtung zu binden und die bindende Beziehung zwischen der tragbaren Vorrichtung und einem mobilen Endgerät mittels des Benutzerkontos herzustellen.

6. Vorrichtung zur Autorisierung einer Operation in einem mobilen Endgerät, **dadurch gekennzeichnet, dass** die Vorrichtung aufweist:
ein Datenerfassungsmodul (620, 810), das konfiguriert ist, Bewegungsdaten zu erfassen, die durch eine tragbare Vorrichtung gesammelt werden,
ein Übereinstimmungsermittlungsmodul (640, 820), das konfiguriert ist zu ermitteln, ob die Bewegungsdaten mit einer physikalischen Bewegung zur Verifikation übereinstimmen, und
ein Operationsdurchführungsmodul (660, 830), das konfiguriert ist, wenn die Bewegungsdaten mit der physikalischen Bewegung zur Verifikation übereinstimmen, zu autorisieren, eine vorgegebene Operation durchzuführen, die der physikalischen Bewegung zur Verifikation entspricht, wobei das Operationsdurchführungsmodul aufweist:
ein Durchführungssubmodul (833), das ein erstes Codesubmodul (8331) aufweist, das konfiguriert ist, einen verschlüsselten Autorisierungscode vom Server zu erfassen, den verschlüsselten Autorisierungscode an die tragbare Vorrichtung zu senden, und einen durch die tragbare Vorrichtung verschlüsselten Autorisierungscode zu erfassen, wobei das Durchführungssubmodul konfiguriert ist, die vorgegebene Operation interaktiv mit dem Server durch Verwenden des Autorisierungscodes durchzuführen.

7. Vorrichtung nach Anspruch 6, **dadurch gekennzeichnet, dass** das Datenerfassungsmodul aufweist:
ein erstes Erfassungssubmodul (811), das konfiguriert ist, wenn eine voreingestellte physikalische Bewegung zur Verifikation vorhanden ist, direkt die durch die tragbare Vorrichtung gesammelten Bewegungsdaten zu erfassen,
oder
ein zweites Erfassungssubmodul (813), das konfiguriert ist, wenn keine voreingestellte physikalische Bewegung zur Verifikation vorhanden ist, zufällig eine physikalische Bewegung zur Verifikation zu erzeugen, einen Benutzer zur Eingabe der physikalischen Bewegung zur Verifikation aufzufordern, und nach dem Auffordern zur Eingabe der physikalischen Bewegung zur Verifikation, die durch die tragbare Vorrichtung gesammelten Bewegungsdaten zu erfassen.

8. Vorrichtung nach einem der Ansprüche 6 bis 7, **dadurch gekennzeichnet, dass** die Vorrichtung ferner aufweist:
eine Vorspeichermodul (880), das konfiguriert ist, im Voraus der Reihe nach mindestens eine physikalische Bewegung zur Verifikation und eine vorgegebene Operation zu speichern, die der mindestens einen physikalischen Bewegung zur Verifikation entspricht, während eine jeweilige physikalische Bewegung zur Verifikation derselben vorgegebenen Operation oder anderen vorgegebene Operationen entspricht.

9. Mobiles Endgerät zur Autorisierung einer Operation, **dadurch gekennzeichnet, dass** das mobile Endgerät aufweist:
einen Prozessor und
einen Speicher zum Speichern von Befehlen, die durch den Prozessor ausführbar sind,
wobei der Prozessor konfiguriert ist, durchzuführen:
Erfassen von Bewegungsdaten, die durch eine tragbare Vorrichtung gesammelt werden,
Ermitteln, ob die Bewegungsdaten mit einer physikalischen Bewegung zur Verifikation übereinstimmen, und
wenn die Bewegungsdaten mit der physikalischen Bewegung zur Verifikation übereinstimmen, Autorisieren, eine vorgegebene Operation durchzuführen, die der physikalischen Bewegung zur Verifikation entspricht, wobei es erforderlich ist, dass die Operation interaktiv mit einem Server durchgeführt wird, wobei der Prozessor konfiguriert ist:
- einen verschlüsselten Autorisierungscode vom Server zu erfassen,
- den verschlüsselten Autorisierungscode an die tragbare Vorrichtung zu senden,
- einen durch die tragbare Vorrichtung verschlüsselten Autorisierungscode zu erfassen und
eine vorgegebene Operation durchzuführen, die der physikalischen Bewegung zur Verifikation entspricht.

10. Computerprogramm, das Befehle zum Ausführen der Schritte des Verfahrens zum Autorisieren einer Operation nach einem der Ansprüche 1 bis 5 umfasst, wenn das Programm durch einen Computer ausgeführt wird.

11. Aufzeichnungsmedium, das durch einen Computer lesbar ist und auf dem aufgezeichnet ist:
- ein Computerprogramm, das Befehle zum Ausführen der Schritte des Verfahrens zum Autorisieren einer Operation zum Anzeigen einer Liste drahtloser Vorrichtungen nach einem der Ansprüche 1 bis 5 aufweist.

## Revendications

1. Procédé pour autoriser une opération, mis en oeuvre dans un terminal mobile, **caractérisé en ce que**, le procédé comprend :
l'acquisition (202) de données de mouvement collectées par un dispositif portable ;
la détection (204, 404, 504) de si les données de mouvement sont concordantes avec un mouvement physique pour vérification ; et
si les données de mouvement sont concordantes avec le mouvement physique pour vérification, l'autorisation (206, 405) d'effectuer une opération prédéterminée correspondant au mouvement physique pour vérification, ladite opération devant être effectuée interactivement avec un serveur, ledit procédé comprenant :
- l'acquisition d'un code d'autorisation chiffré à partir du serveur ;
- l'envoi du code d'autorisation chiffré au dispositif portable ;
- l'acquisition d'un code d'autorisation déchiffré par le dispositif portable ; et
- l'exécution (506) de l'opération prédéterminée interactivement avec le serveur en utilisant le code d'autorisation.

2. Procédé selon la revendication 1, **caractérisé en ce que**, l'étape d'acquisition de données de mouvement collectées par un dispositif portable, comprenant :
si un mouvement physique prédéfini pour vérification existe, l'acquisition directe des données de mouvement collectées par le dispositif portable ;
ou,
si un mouvement physique prédéfini pour vérification n'existe pas, la génération aléatoire d'un mouvement physique pour vérification ; l'invitation d'un utilisateur à propos du mouvement physique pour vérification ; et après l'invitation à propos du mouvement physique pour vérification, l'acquisition des données de mouvement collectées par le dispositif portable.

3. Procédé selon l'une quelconque des revendications 1 à 2, **caractérisé en ce que**, le procédé comprend en outre :
le stockage (401, 501) à l'avance d'au moins un mouvement physique pour vérification, et d'une opération prédéterminée correspondant au au moins un mouvement physique pour vérification un par un, tandis qu'un mouvement physique respectif pour vérification correspondant à une même opération prédéterminée ou à des opérations prédéterminées différentes.

4. Procédé selon l'une quelconque des revendications 1 à 3, **caractérisé en ce que**,
le procédé comprend en outre :
la détection (502) de s'il y a un dispositif portable de liaison qui a été connecté ; et
s'il y a un dispositif portable de liaison qui a été connecté, l'exécution de l'étape d'acquisition de données de mouvement collectées par le dispositif portable (503) ; et/ou
le procédé comprend en outre :
l'établissement à l'avance d'une relation de liaison avec le dispositif portable.

5. Procédé selon la revendication 4, **caractérisé en ce que**, l'étape d'établissement à l'avance d'une relation de liaison avec le dispositif portable, comprend :
l'acquisition d'une autre donnée de mouvement à partir du dispositif portable ; la détection de si ladite une autre donnée de mouvement est concordante avec un mouvement physique pour liaison ; et si ladite une autre donnée de mouvement est concordante avec le mouvement physique pour liaison, l'établissement de la relation de liaison avec le dispositif portable ; ou,
le balayage d'un code d'identification bidimensionnel du dispositif portable pour obtenir une identification du dispositif portable ; l'envoi de l'identification du dispositif portable et d'une identification de dispositif du terminal mobile à un serveur, et le serveur étant configuré pour établir la relation de liaison entre le dispositif portable et le terminal mobile selon l'identification du dispositif portable et l'identification de dispositif du terminal mobile ; ou,
l'envoi d'une identification du dispositif portable et d'un compte d'utilisateur au serveur, le serveur étant configuré pour lier le dispositif portable et le compte d'utilisateur selon l'identification du dispositif portable, et établir la relation de liaison entre le dispositif portable et un terminal mobile utilisant le compte d'utilisateur.

6. Dispositif pour autoriser une opération dans un terminal mobile, **caractérisé en ce que**, le dispositif comprend :
un module d'acquisition de données (620, 810), configuré pour acquérir des données de mouvement collectées par un dispositif portable ;
un module de détection de concordance (640, 820), configuré pour détecter si les données de mouvement sont concordantes avec un mouvement physique pour vérification ; et
un module d'exécution d'opération (660, 830), configuré pour, si les données de mouvement sont concordantes avec le mouvement physique pour vérification, autoriser à effectuer une opération prédéterminée correspondant au mouvement physique pour vérification, où le module d'exécution d'opération comprend :
un sous-module d'exécution (833) comprenant un premier sous-module de code (8331), configuré pour acquérir un code d'autorisation chiffré à partir du serveur ; envoyer le code d'autorisation chiffré au dispositif portable ; et acquérir un code d'autorisation déchiffré par le dispositif portable, le sous-module d'exécution étant configuré pour effectuer l'opération prédéterminée interactivement avec le serveur en utilisant le code d'autorisation.

7. Dispositif selon la revendication 6, **caractérisé en ce que**, le module d'acquisition de données comprenant :
un premier sous-module d'acquisition (811), configuré pour, si un mouvement physique prédéfini pour vérification existe, acquérir directement les données de mouvement collectées par le dispositif portable ;
ou,
un second sous-module d'acquisition (813), configuré pour, si un mouvement physique prédéfini pour vérification n'existe pas, générer aléatoirement un mouvement physique pour vérification ; inviter un utilisateur à propos du mouvement physique pour vérification ; et après l'invitation à propos du mouvement physique pour vérification, acquérir les données de mouvement collectées par le dispositif portable.

8. Dispositif selon l'une quelconque des revendications 6 à 7, **caractérisé en ce que**, le dispositif comprend en outre :
un module de préstockage (880), configuré pour stocker à l'avance au moins un mouvement physique pour vérification, et une opération prédéterminée correspondant au au moins un mouvement physique pour vérification un par un, tandis qu'un mouvement physique respectif pour vérification correspondant à une même opération prédéterminée ou à des opérations prédéterminées différentes.

9. Terminal mobile pour autoriser une opération, **caractérisé en ce que**, le terminal mobile comprend :
un processeur ; et
une mémoire pour stocker des instructions exécutables par le processeur ;
dans lequel le processeur est configuré pour effectuer :
l'acquisition de données de mouvement collectées par un dispositif portable ;
la détection de si les données de mouvement sont concordantes avec un mouvement physique pour vérification ; et
si les données de mouvement sont concordantes avec le mouvement physique pour vérification, l'autorisation d'effectuer une opération prédéterminée correspondant au mouvement physique pour vérification, ladite opération devant être effectuée interactivement avec un serveur, où le processeur est configuré pour :
- acquérir un code d'autorisation chiffré à partir du serveur ;
- envoyer le code d'autorisation chiffré au dispositif portable ;
- acquérir un code d'autorisation déchiffré par le dispositif portable ; et
effectuer une opération prédéterminée correspondant au mouvement physique pour vérification.

10. Programme d'ordinateur comprenant des instructions pour exécuter les étapes de procédé pour autoriser une opération selon l'une quelconque des revendications 1 à 5 lorsque ledit programme est exécuté par un ordinateur.

11. Support d'enregistrement lisible par un ordinateur et ayant enregistré sur celui-ci :
- un programme d'ordinateur incluant des instructions pour exécuter les étapes de procédé pour autoriser une opération pour afficher une liste de dispositifs sans fil selon l'une quelconque des revendications 1 à 5.
